(19) Europäisches Patentamt
European Patent Office
Office européen des brevets

(11) **EP 4 495 875 A1**

(12) **EUROPEAN PATENT APPLICATION**

(43) Date of publication:
**22.01.2025 Bulletin 2025/04**

(21) Application number: **24186200.2**

(22) Date of filing: **03.07.2024**

(51) International Patent Classification (IPC):
**G06T 5/80** (2024.01)

(52) Cooperative Patent Classification (CPC):
**G06T 5/80**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.07.2023 JP 2023117988**

(71) Applicant: **FUJITSU LIMITED**
**Kawasaki-shi, Kanagawa 211-8588 (JP)**

(72) Inventor: **Kanetake, Jun**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **DISTORTION CORRECTION COEFFICIENT CALCULATION METHOD AND PROGRAM**

(57) A method implemented by a computer of calculating a distortion correction coefficient, the method including: extracting a plurality of line segments by executing a line segment extraction process on each of a plurality of captured images that have different imaging times; and calculating an optimal value of the distortion correction coefficient, the calculating of the optimal value including: executing, for each line segment of the plurality of line segments, a distortion correction process on the each line segment while changing a setting value of the distortion correction coefficient, and evaluating a processing result obtained by the executing of the distortion correction process.

FIG. 1

EP 4 495 875 A1

**Description**

FIELD

The embodiments discussed herein are related to a distortion correction coefficient calculation method and a distortion correction coefficient calculation program.

BACKGROUND

Techniques for estimating a position and a speed of an object, a distance to an object, and the like from an image that has been captured have been widely spread. Such estimation involves camera parameters relating to a camera used for imaging. One of the camera parameters (in particular, internal parameters) is a distortion correction coefficient for correcting distortion aberration of a lens.

As a method of computing the distortion correction coefficient, for example, there is a method of imaging a dedicated image pattern such as a checkerboard and computing the distortion correction coefficient, based on the position of the image pattern on the image. However, in this method, the distortion correction coefficient has to be computed using a dedicated image pattern for each camera, which is less convenient. In addition, since an error can be produced in the computation result depending on the manner of imaging, a special technique is involved in working.

In connection with this, a method of computing a distortion correction coefficient using an image obtained by imaging an ordinary environment without using a dedicated image pattern is also considered. For example, a technique for estimating an optimal distortion correction coefficient, based on how a linear component appears in an image when a distortion correction process is applied to a captured image has been proposed.

Note that, as a related technique, a method has been proposed in which a line segment is extracted from an image, a distortion aberration coefficient is calculated for each extracted line segment on the supposition that a part of a straight line be distorted, and an optimal distortion aberration coefficient is estimated by statistically processing calculation results.

Examples of the related art include: [Document 1] Japanese Laid-open Patent Publication No. 2004-86747 ; and [Document 2] KANUKI, Yuta, "Automatic correction method for radial distortion of cameras using environment structures", Doctoral Thesis of Graduate School of Gunma University, December 2015 is also disclosed as related art.

SUMMARY

TECHNICAL PROBLEM

As described above, in the technique of estimating the distortion correction coefficient based on how a linear component appears in the image when the distortion correction process is applied to the captured image, there is a disadvantage that the estimation accuracy deteriorates in a case where a small number of linear components appear in the captured image. For example, a captured image of an in-vehicle camera captured when traveling in an area with a small number of buildings has few linear components, and it is not feasible to estimate the distortion correction coefficient with high accuracy from such a captured image.

In one aspect, an object of the embodiments is to provide a distortion correction coefficient calculation method and a program capable of calculating a distortion correction coefficient with high accuracy from a captured image in an ordinary environment.

SOLUTION TO PROBLEM

According to an aspect of the embodiments, there is provided a method implemented by a computer of calculating a distortion correction coefficient, the method including: extracting a plurality of line segments by executing a line segment extraction process on each of a plurality of captured images that have different imaging times; and calculating an optimal value of the distortion correction coefficient, the calculating of the optimal value including: executing, for each line segment of the plurality of line segments, a distortion correction process on the each line segment while changing a setting value of the distortion correction coefficient, and evaluating a processing result obtained by the executing of the distortion correction process.

ADVANTAGEOUS EFFECTS OF INVENTION

In one aspect, a distortion correction coefficient can be calculated with high accuracy from a captured image in an ordinary environment.

BRIEF DESCRIPTION OF DRAWINGS

FIG. 1 is a diagram illustrating a configuration example and a processing example of an image processing system according to a first embodiment;
FIG. 2 is a diagram illustrating a configuration example of an image processing system according to a second embodiment;
FIG. 3 is a diagram illustrating an example of a checkerboard;
FIG. 4 is a diagram illustrating an example of images before and after distortion correction;
FIG. 5 is a diagram illustrating an example of a captured image having a small number of line segments;
FIG. 6 is a diagram illustrating an example of extracting line segments from a plurality of captured images;
FIG. 7 is a diagram illustrating a configuration example of processing functions provided in an image processing device;
FIG. 8 is a diagram illustrating an example of data stored in a line segment data storage unit;
FIG. 9 is an example of a flowchart illustrating the whole of a distortion correction coefficient calculation process;
FIG. 10 is a flowchart illustrating an example of a line segment addition process;
FIG. 11 is a flowchart illustrating an example of a similar line segment determination process; and
FIG. 12 is a flowchart illustrating an example of a distortion correction coefficient estimation process.

DESCRIPTION OF EMBODIMENTS

Hereinafter, the embodiments will be described with reference to the drawings.

[First Embodiment]

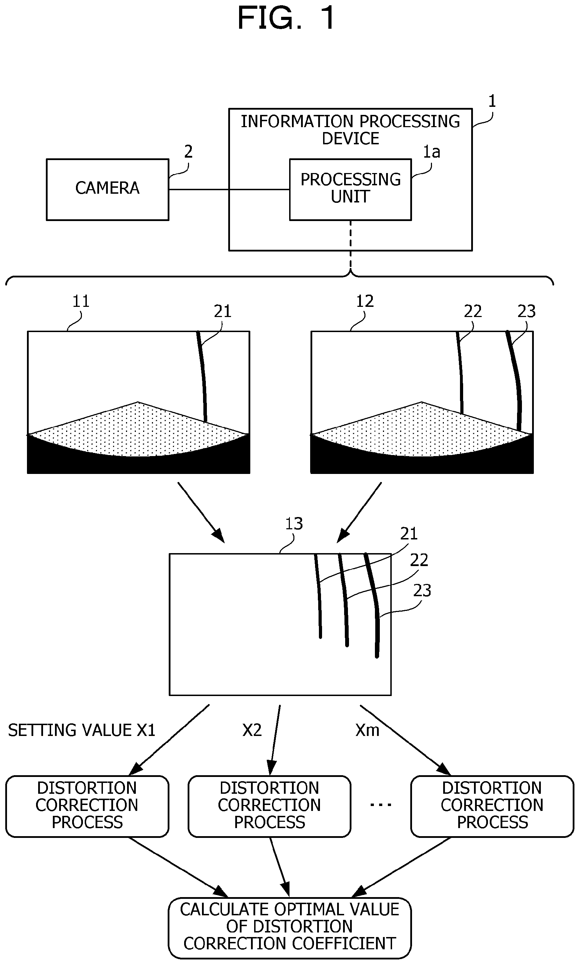

FIG. 1 is a diagram illustrating a configuration example and a processing example of an image processing system according to a first embodiment. The image processing system illustrated in FIG. 1 includes an information processing device 1 and a camera 2.
The information processing device 1 includes a processing unit 1a. The processing unit 1a is, for example, a processor. In this case, processing of the processing unit 1a to be described later can be implemented by the processor executing a predetermined program.
The information processing device 1 acquires a captured image captured by the camera 2 and calculates a distortion correction coefficient for correcting distortion of a lens of the camera 2, using the acquired captured image. The information processing device 1 is enabled to calculate a distortion correction coefficient from a captured image obtained by causing the camera 2 to capture an ordinary environment without causing the camera 2 to capture an image pattern dedicated to calculating the distortion correction coefficient. For example, in a case where the camera 2 is mounted on a vehicle traveling on a road, the information processing device 1 can calculate a distortion correction coefficient from a captured image obtained by the camera 2 capturing a surrounding environment such as a road from the traveling vehicle.
The processing unit 1a of the information processing device 1 calculates the distortion correction coefficient by the procedure as follows.
The processing unit 1a acquires a plurality of captured images captured at different times by the camera 2. For example, the processing unit 1a acquires a plurality of captured images continuously captured in time series. The processing unit 1a extracts a plurality of line segments by executing a line segment extraction process on each of the plurality of acquired captured images. The extraction of the line segment can be executed using a known straight line detection approach such as Hough transform or line segment detector (LSD), for example.
In the example in FIG. 1, captured images 11 and 12 having different imaging times are acquired, a line segment 21 is extracted from the captured image 11, and line segments 22 and 23 are extracted from the captured image 12. In addition, a composite image 13 illustrated in FIG. 1 is obtained by compositing and displaying the extracted line segments 21 to 23 on the same image. However, the composite image 13 does not actually have to be generated, and it is sufficient to acquire at least position information in the image on the extracted line segments 21 to 23.
The processing unit 1a executes a distortion correction process on the extracted line segments 21 to 23 while changing a setting value of the distortion correction coefficient. In the example in FIG. 1, the distortion correction process using each of m setting values X1, X2, ..., and Xm is executed on the line segments 21 to 23. In a case where distortion occurs in the lens, the position or shape of the line segments 21 to 23 after execution of the distortion correction process can change.
The processing unit 1a calculates an optimal value of the distortion correction coefficient by evaluating the processing result of such distortion correction process. For example, every time the distortion correction process is executed using setting values different from each other, the processing unit 1a calculates entropy of a direction histogram for the line segments 21 to 23 after the distortion correction process is executed and calculates an optimal value of the distortion correction coefficient, based on the calculated entropy.

Here, in the above calculation process of calculating an optimal value of the distortion correction coefficient using the extracted line segments, if the number of extracted line segments is small, it is no longer feasible to accurately calculate the distortion correction coefficient. For example, only one line segment 21 is extracted from the captured image 11, and only two line segments 22 and 23 are extracted from the captured image 12. Therefore, in a case where an optimal value of the distortion correction coefficient is calculated by the above procedure using only the captured image 11 or using only the captured image 12, it is not feasible to precisely calculate the distortion correction coefficient.

In contrast to this, in the present embodiment, the optimal value of the distortion correction coefficient is calculated using the line segments extracted from the plurality of captured images having different imaging times. By extracting the line segments from the plurality of captured images having different imaging times, the number of extracted line segments may be increased as compared with a case of using a single captured image. Then, by calculating an optimal value of the distortion correction coefficient using many line segments, the calculation accuracy for the optimal value of the distortion correction coefficient may be further enhanced than in a case of using a single captured image. Consequently, the distortion correction coefficient may be calculated with high accuracy from the captured image in an ordinary environment.

Note that the above-described line segment extraction process and distortion correction coefficient calculation process by the processing unit 1a may be executed, for example, inside the camera 2 or by a device (such as a dashboard camera) on which the camera 2 is mounted.

[Second Embodiment]

Next, as a second embodiment, an image processing system capable of calculating a distortion correction coefficient of a lens of a camera mounted on a dashboard camera from a captured image will be described.

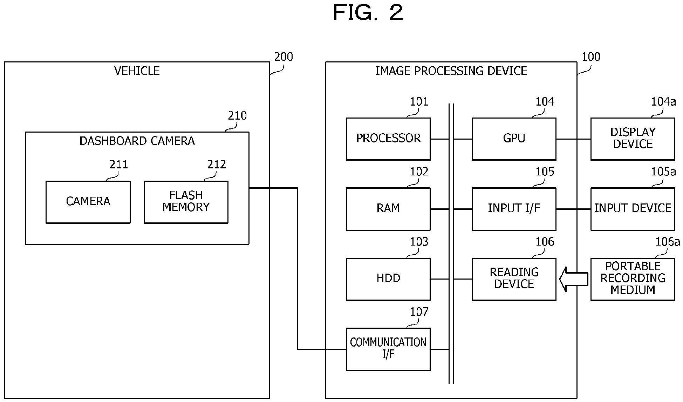

FIG. 2 is a diagram illustrating a configuration example of an image processing system according to the second embodiment. As illustrated in FIG. 2, the image processing system includes an image processing device 100 and a dashboard camera 210.

The dashboard camera 210 (may be referred to as "dashcam", "drive recorder", "driving recorder", and the like) is mounted on a vehicle 200 and includes a camera 211 and a flash memory 212. The camera 211 captures an image in a traveling direction of the vehicle 200, and the image thus captured is encoded by a predetermined encoding scheme and stored in the flash memory 212 as moving image data. In addition, the dashboard camera 210 outputs the moving image data to the image processing device 100. Note that the camera 211 is an example of the camera 2 illustrated in FIG. 1.

The image processing device 100 acquires the moving image data from the dashboard camera 210. In the present embodiment, as an example, the image processing device 100 receives the moving image data from the dashboard camera 210 by communication, but may acquire the moving image data via a portable recording medium, for example. The image processing device 100 calculates a distortion correction coefficient of the lens of the camera 211, using the acquired moving image data. In addition, the image processing device 100 can estimate, for example, a distance to another vehicle appearing in the image and a speed of another vehicle, using the calculated distortion correction coefficient as one of the camera parameters. Such estimation results for the distance and the speed can be used, for example, for situation analysis for a traffic accident. Note that the image processing device 100 is an example of the information processing device 1 illustrated in FIG. 1.

The image processing device 100 is implemented as, for example, a personal computer or a server computer. In this case, as illustrated in FIG. 2, the image processing device 100 includes a processor 101, a random access memory (RAM) 102, a hard disk drive (HDD) 103, a graphics processing unit (GPU) 104, an input interface (I/F) 105, a reading device 106, and a communication interface (I/F) 107.

The processor 101 integrally controls the entire image processing device 100. The processor 101 is, for example, a central processing unit (CPU), a micro processing unit (MPU), a digital signal processor (DSP), a GPU, an application specific integrated circuit (ASIC), or a programmable logic device (PLD). In addition, the processor 101 may be a combination of two or more elements among the CPU, MPU, DSP, GPU, ASIC, and PLD.

The RAM 102 is used as a main storage device of the image processing device 100. The RAM 102 temporarily stores at least a part of an operating system (OS) program or an application program to be executed by the processor 101. In addition, the RAM 102 stores various types of data involved in processing by the processor 101.

The HDD 103 is used as an auxiliary storage device of the image processing device 100. The HDD 103 stores the OS program, the application program, and various types of data. Note that another kind of non-volatile storage device such as a solid state drive (SSD) can also be used as the auxiliary storage device.

A display device 104a is coupled to the GPU 104. The GPU 104 displays an image on the display device 104a in accordance with an instruction from the processor 101. Examples of the display device 104a include a liquid crystal display, an organic electroluminescence (EL) display, and the like.

An input device 105a is coupled to the input interface 105. The input interface 105 transmits a signal output from the input device 105a to the processor 101. Examples of the input device 105a include a keyboard, a pointing device, and the like. Examples of the pointing device include a mouse, a touch panel, a tablet, a touch pad, a track ball, and the like.

A portable recording medium 106a is attached to and detached from the reading device 106. The reading device 106 reads data recorded on the portable recording medium 106a and transmits the read data to the processor 101. Examples of the portable recording medium 106a include an optical disc, a semiconductor memory, and the like.

The communication interface 107 transmits and receives data to and from other devices via, for example, a network (not illustrated). In the present embodiment, the moving image data transmitted from the dashboard camera 210 is received by the communication interface 107.

The processing functions of the image processing device 100 can be implemented by the hardware configuration as described above.

Meanwhile, as described above, the image processing device 100 calculates the distortion correction coefficient of the lens of the camera 211, using the captured images captured by the camera 211. This may enable to estimate the distortion correction coefficient of the lens of the camera 211 even in a case where the model of the dashboard camera 210 is not specifiable.

Here, assuming that the coordinates of a certain pixel on the captured image are (x, y) and the coordinates of the certain pixel after the distortion correction process are (x, y), the distortion correction process is defined by following Formulas (1) to (3).

[Mathematical Formula 1]

$$x' = (1 + k_1 r^2 + k_2 r^4 + k_3 r^6)x + 2p_1 xy + p_2(r^2 + 2x^2) \cdots (1)$$

$$y' = (1 + k_1 r^2 + k_2 r^4 + k_3 r^6)y + 2p_2 xy + p_1(r^2 + 2y^2) \cdots (2)$$

$$r = \sqrt{x^2 + y^2} \cdots (3)$$

In above Formulas (1) and (2), $k_1$, $k_2$, and $k_3$ represent distortion correction coefficients in a radial direction, and $p_1$ and $p_2$ represent distortion correction coefficients in a circumferential direction.

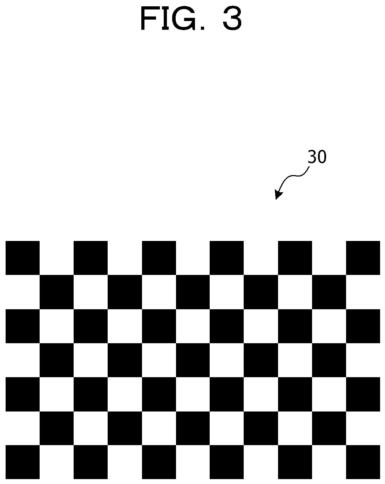

FIG. 3 is a diagram illustrating an example of a checkerboard. As a method of computing the distortion correction coefficient from the captured image, there is a method of using a specific image pattern including feature points whose positions in a three-dimensional space are known. As an example of such an image pattern, a checkerboard 30 as illustrated in FIG. 3 is often used. The checkerboard 30 is imaged with the camera 211, and the distortion correction coefficient is calculated such that the three-dimensional positional relationship between the above feature points is restored on the obtained captured image.

In such a method for computing the distortion correction coefficient, the distortion correction coefficient has to be computed for each camera, using an image pattern dedicated to computation, which takes time and effort for computation and is less convenient. In addition, since an error can be produced in the computation result depending on the manner of imaging, a special technique is involved in working. Therefore, it is desirable that the distortion correction coefficient can be computed using an image obtained by imaging an ordinary environment without using a dedicated image pattern.

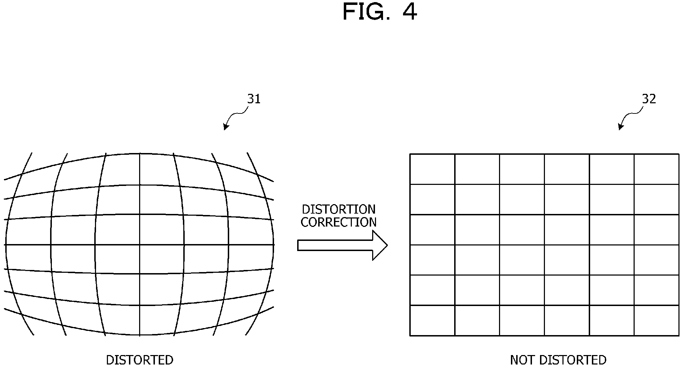

FIG. 4 is a diagram illustrating an example of images before and after distortion correction. An image 31 on the left side of FIG. 4 represents an example of an image in which barrel-shaped radiation distortion occurs. An image 32 on the right side of FIG. 4 represents an example of an image in a case where the distortion correction process is properly performed on the image 31. On the image 31 in which radiation distortion occurs, a line originally supposed to extend in a vertical direction or a horizontal direction appears in a state with an inclination with respect to the vertical direction or the horizontal direction. Moreover, the inclination varies depending on the position on the image 31.

Many linear components extending in the vertical direction or the horizontal direction are likely to appear in a captured image obtained by imaging an ordinary environment. For example, in a case where a road is imaged from the dashboard camera 210, a utility pole and a roadside building often appear as subjects, and these subjects include many linear components extending in the vertical direction or the horizontal direction.

In the present embodiment, using such a property, a distortion correction coefficient is searched for such that many line segments extending in the vertical direction or the horizontal direction are included in the image after the distortion correction process, using a captured image obtained by imaging an ordinary environment. Specifically, the image processing device 100 extracts a line segment from a captured image, executes the distortion correction process while changing the distortion correction coefficient on each extracted line segment, and calculates entropy of the direction histogram for each processed line segment, as an evaluation value.

In a case where most of the extracted line segments face directions close to the vertical direction or the horizontal direction after the distortion correction process, a significant peak of frequency is produced at a specific angle such as 0 degrees, 90 degrees, or 180 degrees in the direction histogram. Since the value of the entropy decreases as the value of the peak rises, the image processing device 100 estimates a distortion correction coefficient that gives a minimum value of the entropy, as an optimal distortion correction coefficient.

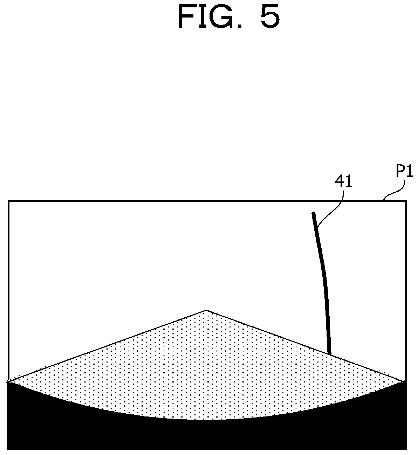

FIG. 5 is a diagram illustrating an example of a captured image having a small number of line segments. The method for computing the distortion correction coefficient described with reference to FIG. 4 can accurately estimate the distortion correction coefficient in a case where a number of line segments to a certain extent or more are extracted from the captured image. However, if the number of line segments extracted from the captured image is too small, there is a disadvantage that the estimation accuracy for the distortion correction coefficient deteriorates. For example, in a captured image captured from an in-vehicle camera, there can be a case where the number of linear components appearing in the captured image is exceptionally small in a case where the vehicle travels in a place where there are few utility poles or roadside buildings. In a case where only one line segment 41 is extracted from a captured image P1 illustrated in FIG. 5 and such a captured image P1 is used, it is not feasible to accurately estimate the distortion correction coefficient.

Thus, in the present embodiment, the image processing device 100 extracts a line segment from each of a plurality of captured images captured at different times, using the same camera 211, and estimates a distortion correction coefficient, using the extracted line segments. By increasing the number of captured images from which the line segments are to be extracted, the number of line segments used at the time of estimating the distortion correction coefficient can be increased. This may enable to accurately estimate the distortion correction coefficient from the captured images even in a case where a place where there are few utility poles or roadside buildings is imaged.

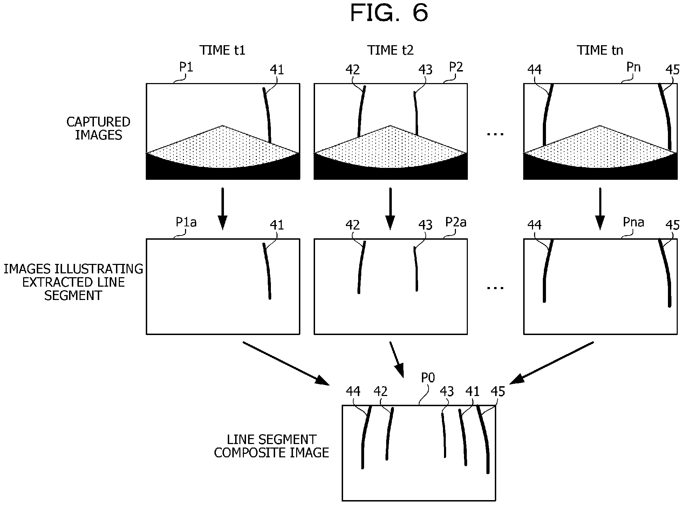

FIG. 6 is a diagram illustrating an example of extracting line segments from a plurality of captured images. FIG. 6 illustrates an example in a case where line segments are extracted from captured images P1 to Pn captured at each of times t1, t2, ..., and tn.

A line segment 41 is extracted from the captured image P1. The image P1a is an image illustrating only the extracted line segment 41 on the captured image P1. Line segments 42 and 43 are extracted from the captured image P2. The image P2a is an image illustrating only the extracted line segments 42 and 43 on the captured image P2. Line segments 44 and 45 are extracted from the captured image Pn. The image Pna is an image illustrating only the extracted line segments 44 and 45 on the captured image Pn. A line segment composite image P0 is an image in which the extracted line segments 41 to 45 are composited and displayed on the same image.

Note that the images P1a, P2a, and Pna and the line segment composite image P0 do not actually have to be generated. In practice, at least the position information on each of the extracted line segments 41 to 45 only has to be stored. As will be described later, in the present embodiment, coordinates of two ends of each of the extracted line segments 41 to 45 are stored.

Only two or less line segments are extracted from each of the above captured images P1, P2, and Pn. Therefore, in a case where the distortion correction coefficient is estimated using any of the captured images P1, P2, and Pn alone, it is not feasible to accurately estimate the distortion correction coefficient. In contrast to this, by using the line segments 41 to 45 extracted from each of the captured images P1, P2, and Pn, the estimation accuracy for the distortion correction coefficient may be improved.

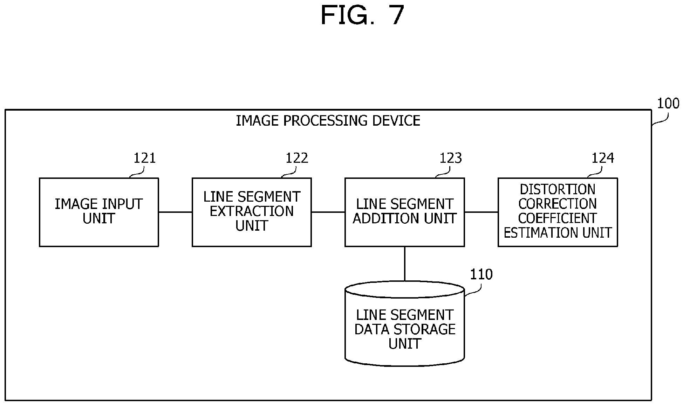

FIG. 7 is a diagram illustrating a configuration example of processing functions provided in the image processing device. The image processing device 100 includes a line segment data storage unit 110, an image input unit 121, a line segment extraction unit 122, a line segment addition unit 123, and a distortion correction coefficient estimation unit 124.

The line segment data storage unit 110 is a storage area secured in a storage device included in the image processing device 100, such as the RAM 102 or the HDD 103. The line segment data storage unit 110 stores line segment data indicating line segments extracted from a plurality of captured images.

Processing of the image input unit 121, the line segment extraction unit 122, the line segment addition unit 123, and the distortion correction coefficient estimation unit 124 is implemented, for example, by the processor 101 executing a predetermined program.

The image input unit 121 accepts an input of moving image data captured by the camera 211. The image input unit 121 extracts data of captured images frame by frame from the input moving image data and sequentially inputs the extracted data to the line segment extraction unit 122.

The line segment extraction unit 122 extracts a line segment from the input captured image. The line segment extraction unit 122 inputs the line segment data indicating each extracted line segment to the line segment addition unit 123.

The line segment addition unit 123 additionally registers, in the line segment data storage unit 110, line segment data of a line segment that does not meet a predetermined exclusion condition, among the line segments extracted from the captured images. As the exclusion condition, a condition that the position of the line segment is included in a predetermined area set in the vicinity of the center of the captured image and a condition that the position and direction of the line segment are similar to the position and direction of a line segment stored in the line segment data storage unit 110 are used.

The distortion correction coefficient estimation unit 124 executes a distortion correction process on each line segment stored in the line segment data storage unit 110 while changing the setting value of the distortion correction coefficient and calculates an evaluation value regarding the processing result. As the evaluation value, entropy of a direction histogram for each line segment after execution of the distortion correction process is used. The distortion correction coefficient estimation unit 124 estimates an optimal value of the distortion correction coefficient, based on the calculated evaluation value.

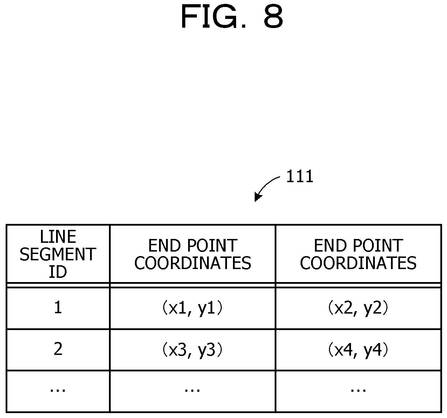

FIG. 8 is a diagram illustrating an example of data stored in the line segment data storage unit. The line segment data storage unit 110 stores, for example, a line segment data table 111 as illustrated in FIG. 8. In the line segment data table 111, a record for each line segment extracted from the captured images is registered. In each record, a line segment identifier (ID) for identifying the line segment, and end point coordinates of one end and another end of the line segment are registered. The end point coordinates indicate coordinates in the captured image before the distortion correction process.

Next, processing of the image processing device 100 will be described using a flowchart.

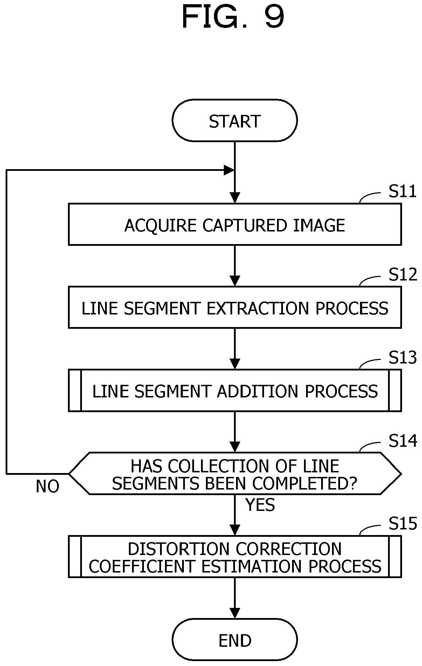

FIG. 9 is an example of a flowchart illustrating the whole of a distortion correction coefficient calculation process.

[Step S11] The image input unit 121 acquires a captured image (image frame) from moving image data. In this step S11, for example, captured images that are continuous in time series are acquired frame by frame. However, for example, captured images may be acquired at intervals interposed between every predetermined number of frames.

[Step S12] The line segment extraction unit 122 extracts a line segment from the captured image by executing the line segment extraction process on the captured image acquired in step S11. The extraction of the line segment is executed using, for example, a known straight line detection approach such as Hough transform or LSD. The line segment extraction unit 122 temporarily stores the end point coordinates of two ends of each extracted line segment in, for example, the RAM 102 as data to be treated as a processing object in next step S13.

[Step S13] The line segment addition unit 123 executes a line segment addition process of distinguishing a line segment not meeting the predetermined exclusion condition from among the line segments extracted in step S12 and additionally registering the line segment data of the distinguished line segment in the line segment data storage unit 110.

[Step S14] The line segment addition unit 123 determines whether the collection of the line segments from the captured images has been completed. For example, in a case where the number of line segments registered in the line segment data storage unit 110 has reached a predetermined number or more, it is determined that the collection of the line segments has been completed. Alternatively, it may be determined that the collection of the line segments has been completed in a case where the processes in steps S11 to S13 have been executed on all the captured images (image frames) included in the moving image data. In a case where the collection of the line segments has not been completed, the process proceeds to step S11, and the next captured image is acquired. On the other hand, in a case where the collection of the line segments has been completed, the process proceeds to step S15.

[Step S15] The distortion correction coefficient estimation unit 124 executes a distortion correction coefficient estimation process, using the line segments registered in the line segment data storage unit 110.

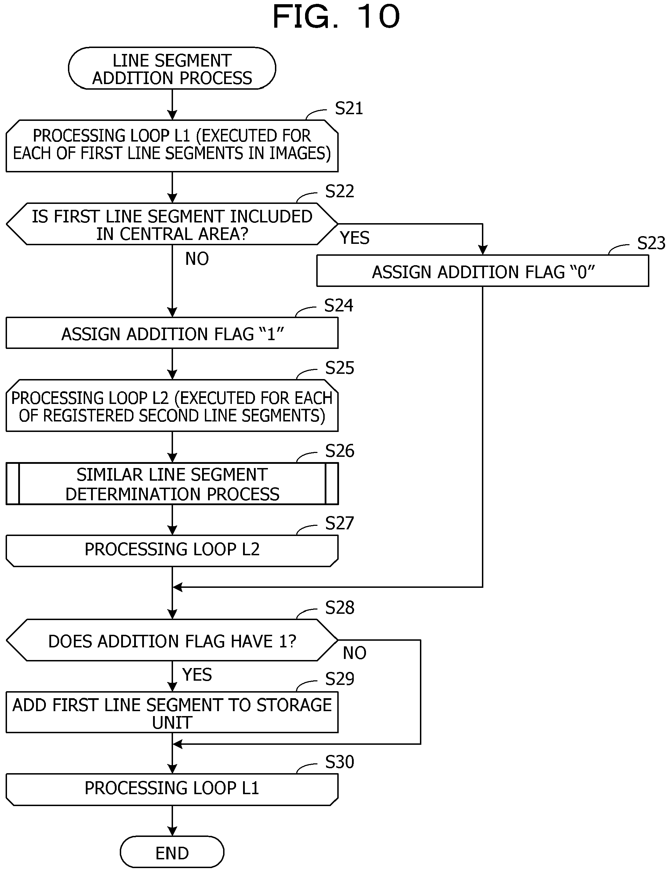

FIG. 10 is a flowchart illustrating an example of the line segment addition process. This process in FIG. 10 corresponds to the process in step S13 in FIG. 9. In the following description, a line segment extracted from the captured image in step S12 in FIG. 9 will be expressed as a "first line segment", and a line segment registered in the line segment data storage unit 110 will be expressed as a "second line segment".

Note that, in a case where even one second line segment is not registered in the line segment data storage unit 110 at the start of the process in FIG. 10, all the first line segments extracted from the captured images are unconditionally registered in the line segment data storage unit 110.

[Step S21] The line segment addition unit 123 executes a processing loop L1 up to step S30 with each of the first line segments extracted from the captured images as a processing object.

[Step S22] The line segment addition unit 123 determines whether the processing object first line segment is included in a central area set in a central portion of the captured image. In a case where it is determined that the first line segment is included in the central area, the process proceeds to step S23, and in a case where it is determined that the first line segment is not included in the central area, the process proceeds to step S24.

This central area is an area preset centered on the center point of the captured image. For example, the central area is set as a rectangular area having a predetermined number of pixels in a lateral direction and a predetermined number of pixels in a longitudinal direction from the center point of the captured image. Alternatively, the central area may be set as an elliptical area having a predetermined number of pixels in the lateral direction and a predetermined number of pixels in the longitudinal direction from the center point of the captured image.

In addition, a case where the first line segment is determined to be included in the central area may be a case where the entire first line segment is included in the central area, or may be a case where at least a part of the first line segment is included in the central area. As an example of the latter, in a case where an area exceeding 50% of the straight line connecting between the end points of the first line segment is included in the central area, it may be determined that the first line segment is included in the central area.

[Step S23] The line segment addition unit 123 assigns an addition flag of a value "0" to the first line segment.

[Step S24] The line segment addition unit 123 assigns an addition flag of a value "1" to the first line segment.

[Step S25] The line segment addition unit 123 executes a processing loop L2 up to step S27 with each of the second line segments registered in the line segment data storage unit 110 as a processing object.

[Step S26] The line segment addition unit 123 executes a similar line segment determination process of determining whether the processing object first line segment in the processing loop L1 is similar to the processing object second line segment in the processing loop L2. In this process, in a case where it is determined that the first line segment is similar to the second line segment, the value of the addition flag assigned to the first line segment is updated to "0" from "1".

[Step S27] In a case where the process in step S26 in which all the second line segments registered in the line segment data storage unit 110 are treated as processing objects has been completed, the process proceeds to step S28.

[Step S28] The line segment addition unit 123 determines whether the value of the addition flag assigned to the first line segment has "1". In a case where the value of the addition flag has "1", the process proceeds to step S29, and in a case where the value of the addition flag has "0", the process proceeds to step S30.

[Step S29] The line segment addition unit 123 adds the first line segment to the line segment data storage unit 110. Specifically, the end point coordinates of two ends of the first line segment are additionally registered in the line segment data storage unit 110.

[Step S30] In a case where the processes in steps S22 to S29 in which all the first line segments extracted from the captured images are treated as processing objects have been completed, the line segment addition process ends.

In the process in FIG. 10 described above, among the first line segments extracted from the captured images, the first line segment determined to be included in the central area is not registered in the line segment data storage unit 110 and is not used in the distortion correction coefficient estimation process. In the vicinity of the center point of the captured image, lens distortion hardly occurs. Therefore, the shape and direction of the line segment present in the vicinity of the center point change little before and after the distortion correction process.

For such a reason, it is considered that the first line segment determined to be included in the central area has a low contribution degree in the distortion correction coefficient estimation process and is less desired. By excluding such a first line segment from the objects of the distortion correction coefficient estimation process, execution of useless computation may be avoided in the estimation process without deteriorating the estimation accuracy, and the estimation processing time may be shortened.

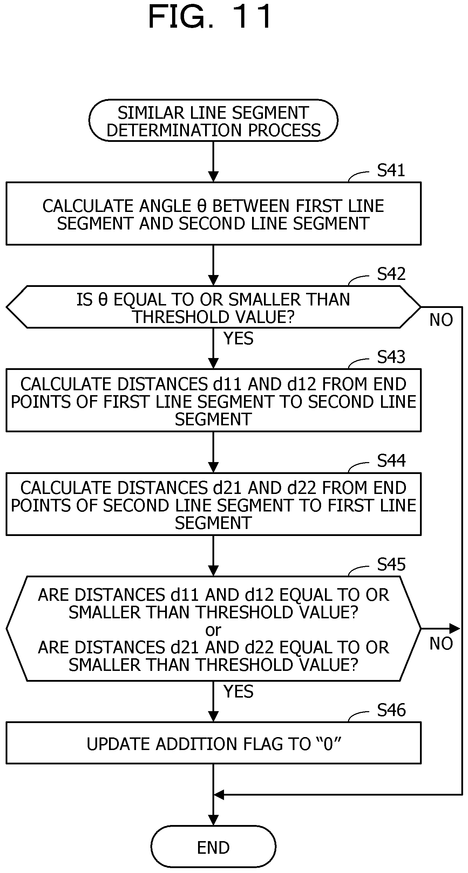

In addition, in the similar line segment determination process in step S26, in a case where it is determined that the first line segment is similar to any of the second line segments registered in the line segment data storage unit 110, the first line segment is not registered in the line segment data storage unit 110 and is no longer used in the distortion correction coefficient estimation process. As will be described next with reference to FIG. 11, the first line segment similar to the second line segment is a first line segment whose extending direction is close to the extending direction of the second line segment and whose position is also close to the position of the second line segment. The estimation accuracy may be improved by restraining line segments having similar directions and positions from being used in the distortion correction coefficient estimation process.

FIG. 11 is a flowchart illustrating an example of the similar line segment determination process. This process in FIG. 11 corresponds to the process in step S26 in FIG. 10.

[Step S41] The line segment addition unit 123 calculates an angle $\theta$ of an angle formed by the processing object first line segment and the processing object second line segment. In this process, for example, a difference between an angle of a straight line connecting between end points of the first line segment and an angle of a straight line connecting between end points of the second line segment is calculated as the angle $\theta$. However, it is assumed that the angle of each straight line is denoted as an angle with respect to a predetermined rotation direction with reference to a predetermined reference direction (such as the horizontal direction) and takes a value from 0 degrees to 180 degrees.

[Step S42] The line segment addition unit 123 determines whether the calculated angle $\theta$ is equal to or smaller than a predetermined threshold value. This threshold value is intended to determine the closeness in direction (angle) of each line segment, and an angle larger than zero but close to zero is set.

In a case where the angle $\theta$ is equal to or smaller than the threshold value, the process proceeds to step S43, and in a case where the angle $\theta$ is larger than the threshold value, the similar line segment determination process ends. In the latter case, the value of the addition flag appended to the first line segment remains "1", and the first line segment will be added to the line segment data storage unit 110 in step S29 in FIG. 10.

[Step S43] The line segment addition unit 123 calculates a shortest distance $d11$ from an end point at one end of the first line segment to the second line segment (to a straight line connecting two ends of the second line segment), and a shortest distance $d12$ from an end point at another end of the first line segment to the second line segment (to a straight line connecting two ends of the second line segment).

[Step S44] The line segment addition unit 123 calculates a shortest distance $d21$ from an end point at one end of the second line segment to the first line segment (to a straight line connecting two ends of the first line segment), and a shortest distance d22 from an end point at another end of the second line segment to the first line segment (to a straight line connecting two ends of the first line segment).

[Step S45] The line segment addition unit 123 determines whether at least one of a first condition and a second condition regarding the distance is satisfied. The first condition is a condition that both of the distances d11 and d12 are equal to or smaller than a predetermined threshold value, and the second condition is a condition that both of the distances d21 and d22 are equal to or smaller than a predetermined threshold value. In a case where at least one of the first condition and the second condition is satisfied, the process proceeds to step S46, and in a case where neither of the first condition and the second condition is satisfied, the similar line segment determination process ends. In the latter case, the value of the addition flag appended to the first line segment remains "1", and the first line segment will be added to the line segment data storage unit 110 in step S29 in FIG. 10.

[Step S46] The line segment addition unit 123 updates the value of the addition flag appended to the first line segment to "0". This ensures that the first line segment is not added to the line segment data storage unit 110.

In the process in FIG. 11 described above, in a case where a second line segment having both of a direction and a position close to the direction and position of the first line segment extracted from the captured image has been already registered in the line segment data storage unit 110, that first line segment is not registered in the line segment data storage unit 110 and is not used in the distortion correction coefficient estimation process. When the distortion correction process is executed, the directions of the line segments having close directions and positions change in the same manner. Therefore, when a large number of line segments having close directions and positions are used in the distortion correction coefficient estimation process, there is a possibility that a frequency deviation occurs in a specific angular range (bin) of the direction histogram, and as a result, the estimation accuracy of the distortion correction coefficient can deteriorate. Accordingly, the estimation accuracy may be improved by excluding the first line segment as described above from the objects of the distortion correction coefficient estimation process.

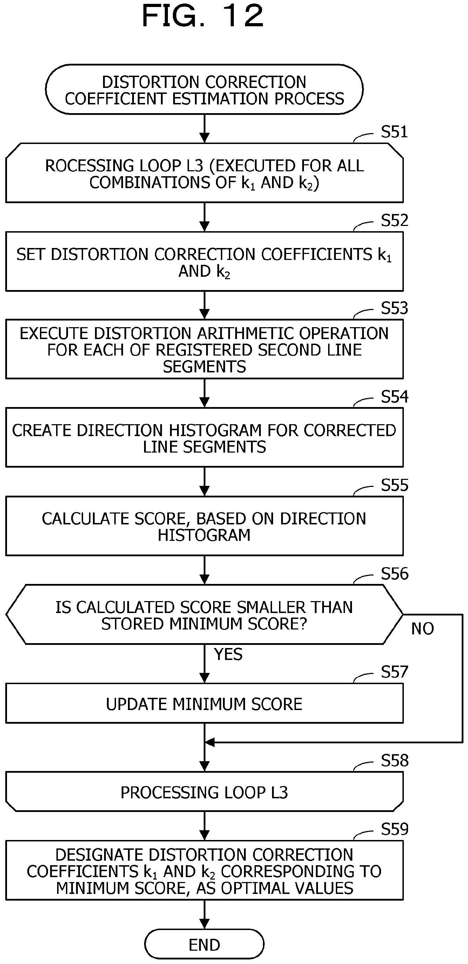

FIG. 12 is a flowchart illustrating an example of the distortion correction coefficient estimation process. This process in FIG. 12 corresponds to the process in step S15 in FIG. 9.

Note that the influence of distortion correction coefficients $p_1$ and $p_2$ in the circumferential direction is small as compared with the influence of the distortion correction coefficients $k_1$, $k_2$, and $k_3$ in the radial direction. Therefore, in the following process, $p_1 = p_2 = 0$ will be assumed. In addition, in order to shorten the processing time, $k_3 = 0$ will be assumed, but an optimal value of the distortion correction coefficient $k_3$, as well as the distortion correction coefficients $k_1$ and $k_2$, may also be searched for.

[Step S51] The distortion correction coefficient estimation unit 124 executes a processing loop L3 up to step S58 for all settable combinations of the distortion correction coefficients $k_1$ and $k_2$.

[Step S52] The distortion correction coefficient estimation unit 124 selects one combination of the distortion correction coefficients $k_1$ and $k_2$ and sets the selected distortion correction coefficients $k_1$ and $k_2$ and $k_3 = p_1 = p_2 = 0$ in above-described Formulas (1) and (2).

[Step S53] The distortion correction coefficient estimation unit 124 executes the distortion correction process on each of the second line segments registered in the line segment data storage unit 110, using Formulas (1) to (3). Specifically, the distortion correction coefficient estimation unit 124 calculates each end point coordinate after correction by converting each end point coordinate of the second line segment by Formulas (1) to (3).

[Step S54] The distortion correction coefficient estimation unit 124 creates a direction histogram for the line segment (corrected line segment) whose end point coordinates of two ends have been converted by the distortion correction process.

Specifically, the distortion correction coefficient estimation unit 124 calculates the direction of each corrected line segment as a direction (angle) of a straight line connecting between end points of the corrected line segment. However, it is assumed that the angle of each straight line is denoted as an angle with respect to a predetermined rotation direction with reference to a predetermined reference direction (such as the horizontal direction) and takes a value from 0 degrees to 180 degrees.

The distortion correction coefficient estimation unit 124 counts the frequency for each angular range (bin) obtained by dividing the range from 0 degrees to 180 degrees into I sections, based on the angle of each corrected line segment. This creates a direction histogram regarding the corrected line segments.

[Step S55] The distortion correction coefficient estimation unit 124 calculates a score for evaluating the appropriateness of the set distortion correction coefficients $k_1$ and $k_2$, based on the direction histogram. The score is computed using following Formula (4) for calculating entropy e of the direction histogram.

[Mathematical Formula 4]

$$e = \sum_{i=0}^{l} (-h(i) \log_2 h(i)) \quad \cdot \cdot \cdot (4)$$

In Formula (4), I represents the number of bins, and h(i) represents the frequency in an i-th bin. As an example, assuming that the range of each bin has one degree, the number of bins I=180 is assumed. In addition, the frequency of each bin is normalized such that the sum of the frequencies corresponding to all the bins has one, and the normalized frequency is substituted into Formula (4). Note that, for example, the direction of the corrected line segment may be denoted by an angle from 0 degrees to 359 degrees, and the number of bins I = 360 may be assumed.

[Step S56] At the time of the first execution of this step S56, the distortion correction coefficient estimation unit 124 temporarily stores the calculated score as the minimum score at that time point, for example, in the RAM 102. In this case, the execution of next step S57 will be skipped. The setting values of the distortion correction coefficients $k_1$ and $k_2$ at this time are also stored in association with the minimum score.

In addition, at the time of the second and subsequent executions of step S56, the distortion correction coefficient estimation unit 124 determines whether the calculated score is smaller than the stored minimum score. In a case where the calculated score is smaller than the minimum score, the process proceeds to step S57, and in a case where the calculated score is equal to or larger than the minimum score, the process proceeds to step S58.

[Step S57] The distortion correction coefficient estimation unit 124 updates the stored minimum score with the calculated score. At this time, the setting values of the distortion correction coefficients $k_1$ and $k_2$ at this time are also overwritten and stored in association with the updated minimum score.

[Step S58] In a case where the processes in steps S52 to S57 have been executed for all combinations of the distortion correction coefficients $k_1$ and $k_2$, the process proceeds to step S59. In this case, the minimum value of the scores calculated in step S55 is brought into a stored state as the minimum score.

[Step S59] The distortion correction coefficient estimation unit 124 designates the setting values of the distortion correction coefficients $k_1$ and $k_2$ corresponding to the stored minimum score, as optimal values of the distortion correction coefficients $k_1$ and $k_2$, and outputs the optimal values in a form such as storage in the RAM 102 or screen display.

Note that, for example, in a case where optimal values of the distortion correction coefficients $k_1$, $k_2$, and $k_3$ are searched for, the processing loop L3 only has to be executed for all settable combinations of the distortion correction coefficients $k_1$, $k_2$, and $k_3$. Likewise, in a case where optimal values of the distortion correction coefficients $k_1$, $k_2$, $k_3$, $p_1$, and $p_2$ are searched for, the processing loop L3 only has to be executed for all settable combinations of the distortion correction coefficients $k_1$, $k_2$, $k_3$, pi, and $p_2$.

In the process in FIG. 12 described above, the distortion correction process for each line segment registered in the line segment data storage unit 110 is executed while the combination of the distortion correction coefficients $k_1$ and $k_2$ is changed, and the score for use in evaluation (the entropy of the direction histogram) is calculated each time. Then, the distortion correction coefficients $k_1$ and $k_2$ when the calculated score becomes the minimum are output as optimal values.

As described earlier, as the peak of the frequency in the direction histogram rises, the value of the entropy decreases. In the distortion correction process when the above score becomes the minimum, it is considered that a significant peak of frequency is produced at a specific angle such as 0 degrees, 90 degrees, or 180 degrees. In this state, it is considered that a large number of line segments in directions close to the vertical direction or the horizontal direction occur in the corrected line segments, and it may be estimated that the distortion correction process has been executed most appropriately. Accordingly, the distortion correction coefficients $k_1$ and $k_2$ set at this time are output as optimal values.

Then, by searching for an optimal value of the distortion correction coefficient by the above procedure using a large number of line segments extracted from a plurality of captured images, the distortion correction coefficient may be accurately estimated even if the captured images include a captured image in which almost no building appears.

Note that at least a part of the processing functions of the image processing device 100 illustrated in FIG. 7 may be mounted on the dashboard camera 210. For example, a processor (not illustrated) included in the dashboard camera 210 may extract a line segment from the captured image, additionally register the line segment in the line segment data storage unit 110, and execute the distortion correction coefficient estimation process using the registered line segment. In this case, the distortion correction coefficient is calculated and stored in the flash memory 212 in a predetermined period such as immediately after the dashboard camera 210 is attached to the vehicle 200. Then, the image captured by the camera 211 may be corrected using the stored distortion correction coefficient and stored in the flash memory 212 thereafter.

In addition, in the second embodiment described above, the distortion correction process is executed on each line segment extracted from the plurality of captured images, and the optimal value of the distortion correction coefficient is calculated using each corrected line segment. However, as another method, the distortion correction process may be executed on the line segment composite image P0 by referring to the line segment composite image P0 (see FIG. 6) obtained by compositing the line segments extracted from the plurality of captured images, a line segment may be extracted from the corrected image, and an optimal value of the distortion correction coefficient may be calculated using each extracted line segment. In addition, the luminance gradient of the corrected image may be computed directly from the line segment composite image P0, using the procedure described in KANUKI, Yuta, *"Automatic correction method for radial distortion of cameras using environment structures"*, Doctoral Thesis of Graduate School of Gunma University, December 2015, and an optimal value of the distortion correction coefficient may be calculated based on the entropy of the direction histogram of the luminance gradient. Furthermore, a line segment may be extracted from the line segment composite image P0, using the procedure described in Japanese Laid-open Patent Publication No. 2004-86747, a distortion correction coefficient may be calculated directly from each extracted line segment, and a final distortion correction coefficient may be calculated by statistically processing the calculated distortion correction coefficients.

Note that, the processing functions of the devices (such as the information processing device 1 and the image processing device 100) described in each embodiment described above can be implemented by a computer. In that case, a program describing the processing contents of the functions supposed to be held by each device is provided, and the processing functions described above are implemented on the computer by execution of the program on the computer. The program describing the processing contents can be recorded in a computer-readable recording medium. The computer-readable recording medium includes a magnetic storage device, an optical disc, a semiconductor memory, and the like. The magnetic storage device includes a hard disk drive device (HDD), a magnetic tape, and the like. The optical disc includes a compact disc (CD), a digital versatile disc (DVD), a Blu-ray disc (BD, registered trademark), and the like.

In a case where the program is to be distributed, for example, portable recording media such as DVDs and CDs on which the program is recorded are sold. In addition, it is also possible to store the program in a storage device of a server computer and transfer the program to another computer from the server computer via a network.

The computer that executes the program stores, for example, the program recorded on the portable recording medium or the program transferred from the server computer in its own storage device. Then, the computer reads the program from its own storage device and executes processing in accordance with the program. Note that the computer can also read the program directly from the portable recording medium and execute processing in accordance with the program. In addition, the computer can also successively execute processing in accordance with the received program each time the program is transferred from the server computer coupled via the network.

**Claims**

1. A method implemented by a computer of calculating a distortion correction coefficient, the method comprising:

   extracting a plurality of line segments by executing a line segment extraction process on each of a plurality of captured images that have different imaging times; and
   calculating an optimal value of the distortion correction coefficient, the calculating of the optimal value including:
   executing, for each line segment of the plurality of line segments, a distortion correction process on the each line segment while changing a setting value of the distortion correction coefficient, and evaluating a processing result obtained by the executing of the distortion correction process.

2. The method according to claim 1, wherein
   the extracting of the plurality of line segments includes:

   excluding the line segments that have positions and directions similar to the positions and the directions of other line segments, from line segments extracted from each of the plurality of captured images; and
   extracting remaining line segments as the plurality of line segments.

3. The method according to claim 1, wherein
   the extracting of the plurality of line segments includes:

   excluding the line segments included in a predetermined area in a center of an image, from the line segments extracted from each of the plurality of captured images; and
   extracting remaining line segments as the plurality of line segments.

4. The method according to claim 1, wherein
   the calculating of the optimal value includes:

   calculating entropy of a direction histogram for the plurality of line segments after the distortion correction process is executed, every time the distortion correction process is executed while the setting value is changed; and
   calculating the optimal value, based on the entropy.

5. A distortion correction coefficient calculation program comprising instructions which, when executed by a computer, cause the computer to perform processing comprising:

   extracting a plurality of line segments by executing a line segment extraction process on each of a plurality of captured images that have different imaging times; and

calculating an optimal value of the distortion correction coefficient, the calculating of the optimal value including: executing, for each line segment of the plurality of line segments, a distortion correction process on the each line segment while changing a setting value of the distortion correction coefficient, and evaluating a processing result obtained by the executing of the distortion correction process.

# FIG. 1

INFORMATION PROCESSING DEVICE 1

CAMERA 2

PROCESSING UNIT 1a

11 21

12 22 23

13 21 22 23

SETTING VALUE X1 X2 Xm

DISTORTION CORRECTION PROCESS

DISTORTION CORRECTION PROCESS

· · ·

DISTORTION CORRECTION PROCESS

CALCULATE OPTIMAL VALUE OF DISTORTION CORRECTION COEFFICIENT

# FIG. 2

# FIG. 3

30

# FIG. 4

DISTORTION
CORRECTION

DISTORTED

NOT DISTORTED

# FIG. 5

# FIG. 6

FIG. 7

IMAGE PROCESSING DEVICE

100

121
IMAGE INPUT UNIT

122
LINE SEGMENT EXTRACTION UNIT

123
LINE SEGMENT ADDITION UNIT

124
DISTORTION CORRECTION COEFFICIENT ESTIMATION UNIT

110
LINE SEGMENT DATA STORAGE UNIT

# FIG. 8

111

| LINE SEGMENT ID | END POINT COORDINATES | END POINT COORDINATES |
|---|---|---|
| 1 | (x1, y1) | (x2, y2) |
| 2 | (x3, y3) | (x4, y4) |
| ... | ... | ... |

# FIG. 9

```
                    ┌──────────────┐
                    │    START     │
                    └──────┬───────┘
                           │
        ┌──────────────────┤                    ╭─ S11
        │          ┌────────▼──────────────────────┐
        │          │   ACQUIRE CAPTURED IMAGE       │
        │          └────────┬──────────────────────┘
        │                   │                    ╭─ S12
        │          ┌────────▼──────────────────────┐
        │          │  LINE SEGMENT EXTRACTION PROCESS│
        │          └────────┬──────────────────────┘
        │                   │                    ╭─ S13
        │          ┌────────▼──────────────────────┐
        │          │  LINE SEGMENT ADDITION PROCESS │
        │          └────────┬──────────────────────┘
        │                   │                    ╭─ S14
        │   NO    ╱─────────▼──────────────────────╲
        └────────╱   HAS COLLECTION OF LINE          ╲
                 ╲   SEGMENTS BEEN COMPLETED?         ╱
                  ╲──────────┬──────────────────────╱
                           YES
                             │                    ╭─ S15
                    ┌────────▼──────────────────────┐
                    │  DISTORTION CORRECTION         │
                    │  COEFFICIENT ESTIMATION PROCESS│
                    └────────┬──────────────────────┘
                             │
                    ┌────────▼──────┐
                    │     END       │
                    └───────────────┘
```

# FIG. 10

LINE SEGMENT
ADDITION PROCESS

S21
PROCESSING LOOP L1 (EXECUTED FOR
EACH OF FIRST LINE SEGMENTS IN IMAGES)

S22
IS FIRST LINE SEGMENT INCLUDED
IN CENTRAL AREA?

YES

S23
ASSIGN ADDITION FLAG "0"

NO

S24
ASSIGN ADDITION FLAG "1"

S25
PROCESSING LOOP L2 (EXECUTED FOR EACH
OF REGISTERED SECOND LINE SEGMENTS)

S26
SIMILAR LINE SEGMENT
DETERMINATION PROCESS

S27
PROCESSING LOOP L2

S28
DOES ADDITION FLAG HAVE 1?

NO

YES

S29
ADD FIRST LINE SEGMENT TO STORAGE
UNIT

S30
PROCESSING LOOP L1

END

# FIG. 11

```
        ╭─────────────────────────────╮
        │  SIMILAR LINE SEGMENT       │
        │  DETERMINATION PROCESS      │
        ╰─────────────────────────────╯
                       │
                       ▼                        ╭─ S41
        ┌─────────────────────────────────────┐
        │  CALCULATE ANGLE θ BETWEEN FIRST LINE│
        │  SEGMENT AND SECOND LINE SEGMENT     │
        └─────────────────────────────────────┘
                       │
                       ▼                        ╭─ S42
        ╱─────────────────────────────────────╲
        │  IS θ EQUAL TO OR SMALLER THAN       │   NO
        │  THRESHOLD VALUE?                    │────►
        ╲─────────────────────────────────────╱
                       │ YES
                       ▼                        ╭─ S43
        ┌─────────────────────────────────────┐
        │  CALCULATE DISTANCES d11 AND d12 FROM END│
        │  POINTS OF FIRST LINE SEGMENT TO SECOND LINE│
        │  SEGMENT                             │
        └─────────────────────────────────────┘
                       │
                       ▼                        ╭─ S44
        ┌─────────────────────────────────────┐
        │  CALCULATE DISTANCES d21 AND d22 FROM END│
        │  POINTS OF SECOND LINE SEGMENT TO FIRST LINE│
        │  SEGMENT                             │
        └─────────────────────────────────────┘
                       │
                       ▼                        ╭─ S45
        ╱─────────────────────────────────────╲
        │  ARE DISTANCES d11 AND d12 EQUAL TO OR│
        │  SMALLER THAN THRESHOLD VALUE?        │   NO
        │  or                                  │────►
        │  ARE DISTANCES d21 AND d22 EQUAL TO OR│
        │  SMALLER THAN THRESHOLD VALUE?        │
        ╲─────────────────────────────────────╱
                       │ YES
                       ▼                        ╭─ S46
        ┌─────────────────────────────────────┐
        │  UPDATE ADDITION FLAG TO "0"         │
        └─────────────────────────────────────┘
                       │
                       ▼
                ╭─────────────╮
                │     END     │
                ╰─────────────╯
```

# FIG. 12

```
┌─────────────────────────────────┐
│     DISTORTION CORRECTION       │
│ COEFFICIENT ESTIMATION PROCESS  │
└─────────────────────────────────┘
                 │
                 ▼                    ⌐ S51
┌─────────────────────────────────────┐
│ ROCESSING LOOP L3 (EXECUTED FOR ALL  │
│  COMBINATIONS OF $k_1$ AND $k_2$)    │
└─────────────────────────────────────┘
                 │
                 ▼                    ⌐ S52
┌─────────────────────────────────────┐
│ SET DISTORTION CORRECTION COEFFICIENTS $k_1$ │
│              AND $k_2$               │
└─────────────────────────────────────┘
                 │
                 ▼                    ⌐ S53
┌─────────────────────────────────────┐
│ EXECUTE DISTORTION ARITHMETIC OPERATION │
│  FOR EACH OF REGISTERED SECOND LINE  │
│              SEGMENTS                │
└─────────────────────────────────────┘
                 │
                 ▼                    ⌐ S54
┌─────────────────────────────────────┐
│ CREATE DIRECTION HISTOGRAM FOR CORRECTED │
│            LINE SEGMENTS             │
└─────────────────────────────────────┘
                 │
                 ▼                    ⌐ S55
┌─────────────────────────────────────┐
│ CALCULATE SCORE, BASED ON DIRECTION  │
│              HISTOGRAM               │
└─────────────────────────────────────┘
                 │
                 ▼                    ⌐ S56
┌─────────────────────────────────────┐
│ IS CALCULATED SCORE SMALLER THAN     │───── NO ──┐
│    STORED MINIMUM SCORE?             │           │
└─────────────────────────────────────┘           │
                 │ YES                             │
                 ▼                    ⌐ S57         │
┌─────────────────────────────────────┐           │
│        UPDATE MINIMUM SCORE          │           │
└─────────────────────────────────────┘           │
                 │◄────────────────────────────────┘
                 ▼                    ⌐ S58
┌─────────────────────────────────────┐
│          PROCESSING LOOP L3          │
└─────────────────────────────────────┘
                 │
                 ▼                    ⌐ S59
┌─────────────────────────────────────┐
│ DESIGNATE DISTORTION CORRECTION      │
│ COEFFICIENTS $k_1$ AND $k_2$ CORRESPONDING TO │
│ MINIMUM SCORE, AS OPTIMAL VALUES     │
└─────────────────────────────────────┘
                 │
                 ▼
           ┌──────────┐
           │   END    │
           └──────────┘
```

Europäisches
Patentamt

European
Patent Office

Office européen
des brevets

# EUROPEAN SEARCH REPORT

**Application Number**

EP 24 18 6200

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EDWARD ROSTEN ET AL: "Camera distortion self-calibration using the plumb-line constraint and minimal Hough entropy", ARXIV.ORG, CORNELL UNIVERSITY LIBRARY, 201 OLIN LIBRARY CORNELL UNIVERSITY ITHACA, NY 14853, 24 October 2008 (2008-10-24), XP080415393, DOI: 10.1007/S00138-009-0196-9 * abstract, section 2, 2.3, 2.4, 2.5 * | 1-5 | INV. G06T5/80 |
| X | FRÉDÉRIC DEVERNAY ET AL: "Straight lines have to be straight", MACHINE VISION AND APPLICATIONS., vol. 13, no. 1, 1 August 2001 (2001-08-01), pages 14-24, XP055547791, DE ISSN: 0932-8092, DOI: 10.1007/PL00013269 | 1-3,5 | |
| A | * abstract, sections 3.1, 3.2, 3.3, 3.4 and 3.5 * | 4 | |
| A | KANUKI YUTA ET AL: "Automatic Compensation of Radial Distortion by Minimizing Entropy of Histogram of Oriented Gradients", 2013 2ND IAPR ASIAN CONFERENCE ON PATTERN RECOGNITION, IEEE, 5 November 2013 (2013-11-05), pages 912-916, XP032581651, DOI: 10.1109/ACPR.2013.167 [retrieved on 2014-03-25] * abstract, sections III. A, III. B, III. C and III. D * | 1-5 | **TECHNICAL FIELDS SEARCHED (IPC)** G06T |

-/--

The present search report has been drawn up for all claims

| Place of search | Date of completion of the search | Examiner |
|---|---|---|
| The Hague | 2 December 2024 | Lepetit, Nicolas |

EPO FORM 1503 03.82 (P04C01)

page 1 of 2

## EUROPEAN SEARCH REPORT

Europäisches
Patentamt
European
Patent Office
Office européen
des brevets

Application Number

EP 24 18 6200

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Duane C. Brown: "Close-range camera calibration", PHOTOGRAMMETRIC ENGINEERING, 1 January 1971 (1971-01-01), page 855, XP055516143, Retrieved from the Internet: URL:http://citeseerx.ist.psu.edu/viewdoc/summary?doi=10.1.1.14.6358 [retrieved on 2018-10-17] * the whole document * | 1-5 | |

TECHNICAL FIELDS
SEARCHED    (IPC)

The present search report has been drawn up for all claims

| Place of search | Date of completion of the search | Examiner |
|---|---|---|
| The Hague | 2 December 2024 | Lepetit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004086747 A

**Non-patent literature cited in the description**

- Automatic correction method for radial distortion of cameras using environment structures. **KANUKI, YUTA**. Doctoral Thesis. Graduate School of Gunma University, December 2015